(19) Europäisches Patentamt

European Patent Office

Office européen des brevets

(11) **EP 1 669 976 A2**

(12) **EUROPEAN PATENT APPLICATION**

(43) Date of publication:
**14.06.2006 Bulletin 2006/24**

(51) Int Cl.:
*G09G 3/36* (2006.01)

(21) Application number: **05111894.1**

(22) Date of filing: **09.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.12.2004 KR 2004104572**

(71) Applicant: **Samsung Electronics Co., Ltd.**
**Suwon-si, Gyeonggi-Do (KR)**

(72) Inventor: **Lee, Baek-Woon**
**Yongin-si, Gyeonggi-do (KR)**

(74) Representative: **Modiano, Micaela Nadia et al**
**Modiano, Josif, Pisanty & Staub Ltd.,**
**Baaderstrasse 3**
**80469 München (DE)**

(54) **Liquid crystal display and driving apparatus thereof**

(57) A liquid crystal display and an apparatus of driving display device including a plurality of pixels arrange in a matrix according to an embodiment of the present invention includes: a signal controller converting an input image data ("current input image data") inputted at a first frequency into a plurality of output image data to be outputted at a second frequency; and a data driver converting the output image data supplied from the signal controller into analog data voltages and applying the data voltages to a pixel, wherein the output image data includes a highest output image data that gives the highest luminance to the pixel, and the highest output image data is determined by comparing the current input image data with an input image data of a previous frame ("previous input image data).

## FIG.6

**Description**

## BACKGROUND OF THE INVENTION

**(a) Field of the Invention**

The present invention relates to a liquid crystal display and a driving apparatus thereof.

**(b) Description of Related Art**

Generally, a liquid crystal display (LCD) includes a pair of panels including a plurality of pixel electrodes and a common electrode with a liquid crystal (LC) layer interposed between the panels, the LC layer having dielectric anisotropy. The pixel electrodes are arranged in a matrix and connected to switching elements such as thin film transistors (TFTs). The pixel electrodes are supplied with data voltages through the TFTs row by row. The common electrode extends over an entire surface of one of the panels and is supplied with a common electrode. The pixel electrode and the common electrode, along with the LC layer disposed therebetween, form LC capacitors from a circuit standpoint, and a LC capacitor along with a switching element provide elements for the formation of a pixel.
The LCD generates an electric field in the LC layer by applying voltages to the electrodes, and creates desired images by controlling the strength of the electric field to varying the transmittance of light incident on the LC layer.
LCDs are increasingly used for displaying images in motion and the slow response time of the liquid crystal presents a problem. In particular, with the increase in the size of and the resolution of the display devices, an improvement of the response time is highly desirable.
The slow response time of the liquid crystal means that it takes time for a pixel to reach a desired luminance. The time for obtaining the desired luminance depends on the difference between a target voltage for giving the desired luminance and a previously charged voltage across the LC capacitor of the pixel. The pixel may not reach the desired luminance for a given time if the voltage difference is large.

## SUMMARY OF THE INVENTION

A liquid crystal display and an apparatus of driving display device including a plurality of pixels arrange in a matrix according to an embodiment of the present invention includes: a signal controller converting an input image data ("current input image data") inputted at a first frequency into a plurality of output image data to be outputted at a second frequency; and a data driver converting the output image data supplied from the signal controller into analog data voltages and applying the data voltages to a pixel, wherein the output image data includes a highest output image data that gives the highest luminance to the pixel, and the highest output image data is determined by comparing the current input image data with an input image data of a previous frame ("previous input image data).
The highest output image data may be determined based on a highest provisional image data among provisional image data corresponding to the highest output image data according to a difference between the previous input image data and the current input image data.
The highest output image data may be equal to, higher or lower than the highest provisional image data.
Gamma curves for the provisional image data may be averaged to a gamma curve for the current input image data.
Sum of light amount of the pixel represented by the provisional image data may be equal to light amount of the pixel represented by the current input image data.
The output image data may include a first output image data and a second output image data, and the first output image data may be higher than the second output image data.
The first output image data may be determined based on a first provisional image data corresponding to the first output image data according to a difference between the previous input image data and the current input image data.
The first output image data may be higher than the first provisional image data when the current input image data is higher than the previous input image data.
The first output image data may be lower than the first provisional image data when the current input image data is lower than the previous input image data.
The first output image data may be equal to the first provisional image data when the current input image data is equal to the previous input image data.
The first output image data may be determined based on a transmittance curve in a resultant equilibrium state obtained by continuously applying data voltages corresponding to the first provisional image data and the second provisional image data to the pixel.
The signal controller may include: a frame memory storing the previous input image data and the current input image data; and an image signal modifier comparing the current input image data from the frame memory with the previous input image data and converting the current input image data into the first and the second output image data.

The image signal modifier may include: a lookup table storing the first and the second output image data; and a multiplexer selecting one of the first and the second output image data from the lookup table in response to a control signal.

The image signal modifier may include: a first lookup table storing the first output image data; a second lookup table storing the second output image data; a multiplexer selecting one of the first and the second output image data from the first and the second lookup tables in response to a control signal; and a third lookup table storing the first or the second output image data as function of the previous input image data and the current input image data and outputting the first or the second output image data in response to the previous input image data and the current input image data.

The signal controller may include: a frame memory storing the current input image data and the previous input image data; and an image signal modifier converting the current input image data into the output image data based on the current input image data and the previous input image data from the frame memory, wherein the image signal modifier comprises a lookup table storing output image data for a first part of pairs of the previous input image data and the current input image data, and output image data for a second part of pairs the previous input image data and the current input image data are obtained by using interpolation.

The output image data may include a first output image data and a second output image data, and the first output image data is higher than the second output image data.

The image signal modifier may include: a lookup table storing modification coefficients for the first and the second output image data; a multiplexer selecting one of modification coefficients for the first and the second output image data from the lookup table in response to a control signal; and a calculator performing interpolation according to one of modification coefficients from the multiplexer, the previous input image data and the current input image data.

The image signal modifier may include: a first lookup table storing first modification coefficients for the first output image data; a second lookup table storing second modification coefficients for the second output image data; a multiplexer selecting one of the first and the second modification coefficients from the first and the second lookup table in response to a control signal; a third lookup table storing the first or the second modification coefficients as function of the previous input image data and the current input image data and outputting the first or the second modification coefficients in response to the previous input image data and the current input image data; and a calculator performing interpolation according to the first or the second modification coefficients from the third lookup table, the previous input image data and the current input image data.

The second frequency may be twice the first frequency.

The display device may be a liquid crystal display.

## BRIEF DESCRIPTION OF THE DRAWINGS

The present invention will become more apparent in light of the embodiments described below with reference to the accompanying drawing in which:

Fig. 1 is a block diagram of an LCD according to an embodiment of the present invention;
Fig. 2 is an equivalent circuit diagram of a pixel of an LCD according to an embodiment of the present invention;
Fig. 3 is a block diagram of a signal controller for an LCD according to an embodiment of the present invention;
Fig. 4 is a graph illustrating gamma curves before and after image data modification;
Fig. 5 illustrating data voltages corresponding to the image data before modification (a) and after modification (b);
Fig. 6 is a block diagram of a signal controller according to another embodiment of the present invention;
Fig. 7 is a block diagram of a signal controller according to yet another embodiment of the present invention;
Fig. 8 is a graph illustrating time variation of light transmittance of an LCD using the signal controller shown in Fig. 7;
Fig. 9 is a graph illustrating time variation of light transmittance of an LCD using the signal controller shown in Fig. 3;
Figs. 10 and 11 are block diagrams of exemplary image signal modifier circuits according to embodiments of the present invention;
Fig. 12 illustrates a method of determining output image data for an LCD including the signal controller shown in Fig. 7 according to another embodiment of the present invention; and
Figs. 13 and 14 are block diagrams of image signal modifier circuits according to other embodiments of the present invention.

## DETAILED DESCRIPTION OF EMBODIMENTS

The present invention is described more fully below with reference to the accompanying drawings, in which preferred embodiments of the invention are shown. This invention may, however, be embodied in many different forms and should not be construed as being limited to the embodiments set forth herein. Like numerals refer to like elements throughout.

In the drawings, the thickness of layers and regions are exaggerated for clarity. Like numerals refer to like elements throughout. It will be understood that when an element such as a layer, region or substrate is referred to as being "on" another element, it can be directly on the other element or intervening elements may also be present. In contrast, when an element is referred to as being "directly on" another element, there are no intervening elements present.

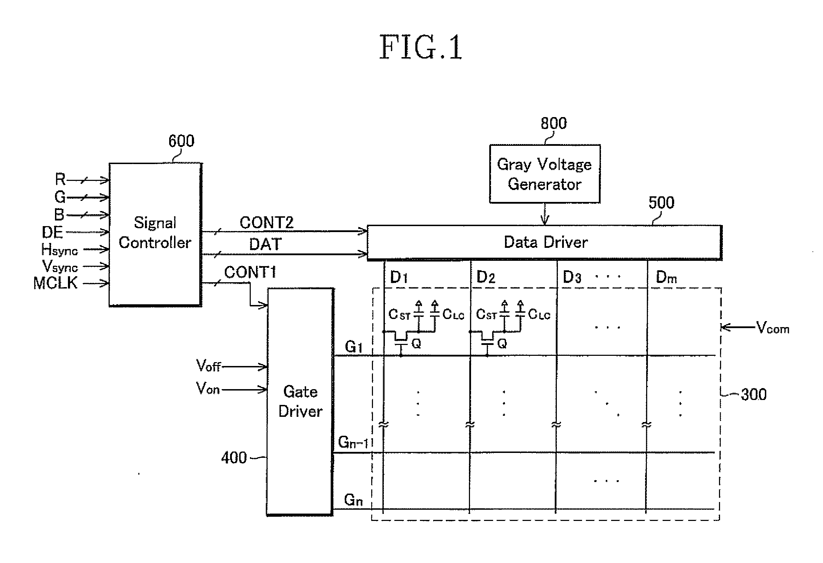

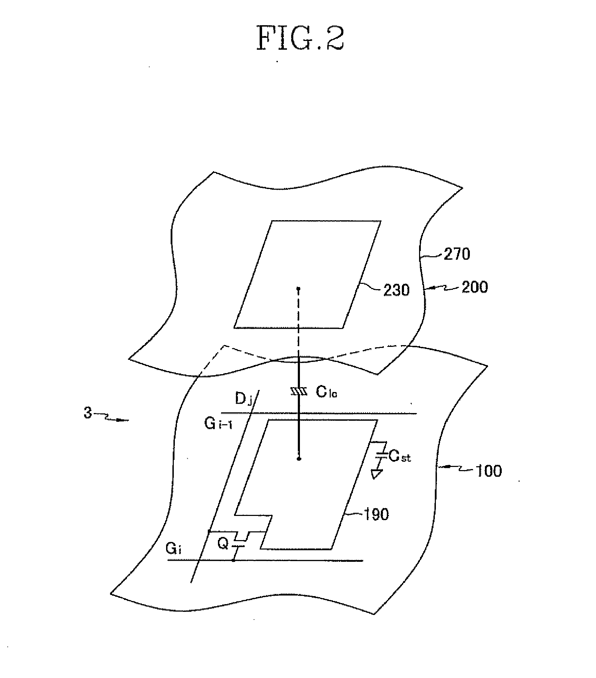

A liquid crystal display according to an embodiment of the present invention is described below in detail with reference to Figs. 1 and 2.

Fig. 1 is a block diagram of an LCD according to an embodiment of the present invention, and Fig. 2 is an equivalent circuit diagram of a pixel of an LCD according to an embodiment of the present invention.

Referring to Fig. 1, an LCD according to an embodiment includes a liquid crystal (LC) panel assembly 300, a gate driver 400 and a data driver 500 that are coupled to the panel assembly 300, a gray voltage generator 800 coupled to data driver 500, and a signal controller 600 controlling the above elements.

The panel assembly 300 includes a plurality of signal lines $G_1$-$G_n$ and $D_1$-$D_m$ and a plurality of pixels PX connected to the signal lines $G_1$-$G_n$ and $D_1$-$D_m$ and arranged substantially in a matrix. In structural view shown in Fig. 2, the panel assembly 300 includes lower and upper panels 100 and 200, respectively, facing each other with a LC layer 3 interposed between the panels 100 and 200.

The signal lines include a plurality of gate lines $G_1$-$G_n$ transmitting gate signals (also referred to as "scanning signals" hereinafter) and a plurality of data lines $D_l$-$D_m$ transmitting data signals. The gate lines $G_l$-$G_n$ extend substantially in a row direction and are substantially parallel to each other, while the data lines $D_1$-$D_m$ extend substantially in a column direction and are substantially parallel to each other.

Referring to Fig. 2, each pixel PX, for example, a pixel PX connected to the i-th gate line $G_i$ (i=1, 2, ..., n) and the j-th data line $D_j$ (j=1, 2, ..., m) includes a switching element Q connected to the signal lines $G_i$ and $D_j$, and a LC capacitor $C_{LC}$ and a storage capacitor $C_{ST}$ that are connected to the switching element Q. Use of storage capacitor $C_{ST}$ is optional.

The switching element Q is disposed on the lower panel 100 and it has three terminals, i.e., a control terminal connected to the gate line $G_i$, an input terminal connected to the data line $D_j$, and an output terminal connected to the LC capacitor $C_{LC}$ and the storage capacitor $C_{ST}$.

The LC capacitor $C_{LC}$ includes a pixel electrode 190 disposed on the lower panel 100 and a common electrode 270 disposed on the upper panel 200 as two terminals. The LC layer 3 disposed between the two electrodes 190 and 270 functions as the dielectric of the LC capacitor $C_{LC}$. The pixel electrode 190 is connected to the switching element Q, and the common electrode 270 is supplied with a common voltage Vcom and covers an entire surface of the upper panel 200. Unlike Fig. 2, the common electrode 270 may be provided on the lower panel 100, and at least one of the electrodes 190 and 270 may have a shape of bar or stripe.

The storage capacitor $C_{ST}$ is an auxiliary capacitor for the LC capacitor $C_{LC}$. The storage capacitor $C_{ST}$ includes the pixel electrode 190 and a separate signal line, which is provided on the lower panel 100, overlaps the pixel electrode 190 via an insulator, and is supplied with a predetermined voltage such as the common voltage Vcom. Alternatively, the storage capacitor $C_{ST}$ can be implemented using pixel electrode 190 and an adjacent gate line, referred to as a previous gate line, which overlaps the pixel electrode 190 via an insulator.

For color display, each pixel uniquely represents one of primary colors (i.e., spatial division) or each pixel sequentially represents the primary colors in turn (i.e., temporal division) such that spatial or temporal sum of the primary colors are recognized as a desired color. An example of a set of the primary colors includes red, green, and blue colors. Fig. 2 shows an example of the spatial division where each pixel includes a color filter 230 representing one of the primary colors in an area of the upper panel 200 facing the pixel electrode 190. Alternatively, the color filter 230 can be provided on or under the pixel electrode 190 on the lower panel 100.

One or more polarizers (not shown) are attached to the panel assembly 300.

Referring to Fig. 1 again, the gray voltage generator 800 generates two sets of a plurality of (reference) gray voltages related to the transmittance of the pixels. The (reference) gray voltages in one set have a positive polarity with respect to the common voltage Vcom, while those in the other set have a negative polarity with respect to the common voltage Vcom.

The gate driver 400 is connected to the gate lines $G_1$-$G_n$ of the panel assembly 300 and synthesizes a gate-on voltage Von and a gate-off voltage Voff to generate the gate signals for application to the gate lines $G_l$-$G_n$.

The data driver circuit 500 is connected to the data lines $D_1$-$D_m$ of the panel assembly 300 and applies data signals, which are selected from the gray voltages supplied from the gray voltage generator 800, to the data lines $D_1$-$D_m$. However, when the gray voltage generator 800 generates less than all of the reference gray voltages required for the gray voltages for all the grays, the data driver circuit 500 divides the reference gray voltages to generate all the gray voltages and selects the data signals among the gray voltages.

The signal controller 600 controls the gate driver circuit 400 and the data driver circuit 500.

Each of driving devices 400, 500, 600 and 800 may include at least one integrated circuit (IC) chip mounted on the LC panel assembly 300 or on a flexible printed circuit (FPC) film in a tape carrier package (TCP) type, which are attached to the panel assembly 300. Alternately, at least one of the driving devices 400, 500, 600 and 800 may be integrated into the panel assembly 300 along with the signal lines $G_1$-$G_n$ and $D_1$-$D_m$ and the switching elements Q. Alternatively, all the driving devices 400, 500, 600 and 800 may be integrated into a single IC chip, but at least one of the driving devices 400, 500, 600 and 800 or at least one circuit element in at least one of the processing units devices 400, 500, 600 and 800 may be disposed out of the single IC chip.

The signal controller 600 is supplied with input image signals R, G and B and input control signals for controlling the display thereof from an external graphics controller (not shown). The input image signals R, G and B contain luminance information for the pixels PX and the luminance has a predetermined number of, for example, 1024 ($=2^{10}$), 256($=2^8$), or 64($=2^6$) grays. The input control signals include a vertical synchronization signal Vsync, a horizontal synchronization signal Hsync, a main clock MCLK, and a data enable signal DE.

On the basis of the input control signals and the input image signals R, G and B, the signal controller 600 generates gate control signals CONT1 and data control signals CONT2 and it processes the image signals R, G and B suitable for the operation of the panel assembly 300 and the data driver 500. The signal controller 600 sends the scanning control signals CONT1 to the gate driver 400 and sends the processed image signals DAT and the data control signals CONT2 to the data driver 500. The output image signals DAT are digital signals having a predetermined number of values (or grays).

The gate control signals CONT1 include a scanning start signal STV for instructing to start scanning and at least one clock signal for controlling the output period of the gate-on voltage Von. The scanning control signals CONT1 may include an output enable signal OE for defining the duration of the gate-on voltage Von.

The data control signals CONT2 include a horizontal synchronization start signal STH for informing of start of data transmission for a row of pixels PX, a load signal LOAD for instructing to apply the data signals to the data lines $D_1$-$D_m$, and a data clock signal HCLK. The data control signal CONT2 may further include an inversion signal RVS for reversing the polarity of the voltage of the data signals (relative to the common voltage Vcom).

Responsive to the data control signals CONT2 from the signal controller 600, the data driver 500 receives a packet of the digital image signals DAT for the row of pixels PX from the signal controller 600, converts the digital image signals DAT into analog data signals selected from the gray voltages, and applies the analog data signals to the data lines $D_1$-$D_m$. The number of the gray voltages generated by the gray voltage generator 800 is equal to the number of the grays represented by the digital output image signals DAT.

The gate driver circuit 400 applies the gate-on voltage Von to a gate line $G_1$-$G_n$ in response to the scanning control signals CONT1 from the signal controller 600, thereby turning on the switching transistors Q connected thereto. The data signals applied to the data lines $D_1$-$D_m$ are then supplied to the pixels PX through the activated switching transistors Q.

The difference between the voltage of a data signal and the common voltage Vcom applied to a pixel PX is represented as a voltage across the LC capacitor $C_{LC}$ of the pixel PX, which is referred to as a pixel voltage. The LC molecules in the LC capacitor $C_{LC}$ have orientations depending on the magnitude of the pixel voltage, and the molecular orientations determine the polarization of light passing through the LC layer 3. The polarizer(s) converts the light polarization into the light transmittance such that the pixel PX has a luminance represented by a gray of the data signal.

By repeating this procedure by a unit of a horizontal period (also referred to as "1H" and equal to one period of the horizontal synchronization signal Hsync and the data enable signal DE), all gate lines $G1$-$G_n$ are sequentially supplied with the gate-on voltage Von, thereby applying the data signals to all pixels PX to display an image for a frame.

When the next frame starts after one frame finishes, the inversion control signal RVS applied to the data driver 500 is controlled such that the polarity of the data signals is reversed (which is referred to as "frame inversion"). The inversion control signal RVS may be also controlled such that the polarity of the data signals flowing in a data line are periodically reversed during one frame (for example, row inversion and dot inversion), or the polarity of the data signals in one packet are reversed (for example, column inversion and dot inversion).

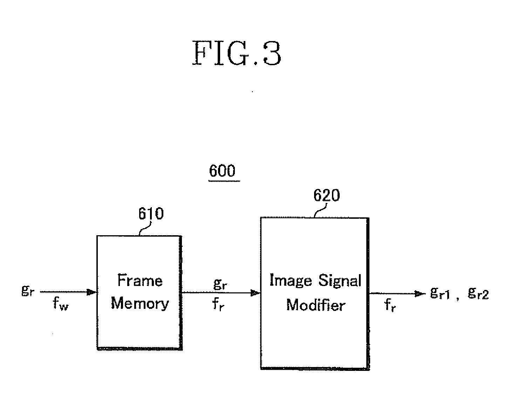

Referring to Figs. 3, 4 and 5, a signal controller for an LCD according to an embodiment of the present invention is described below in detail.

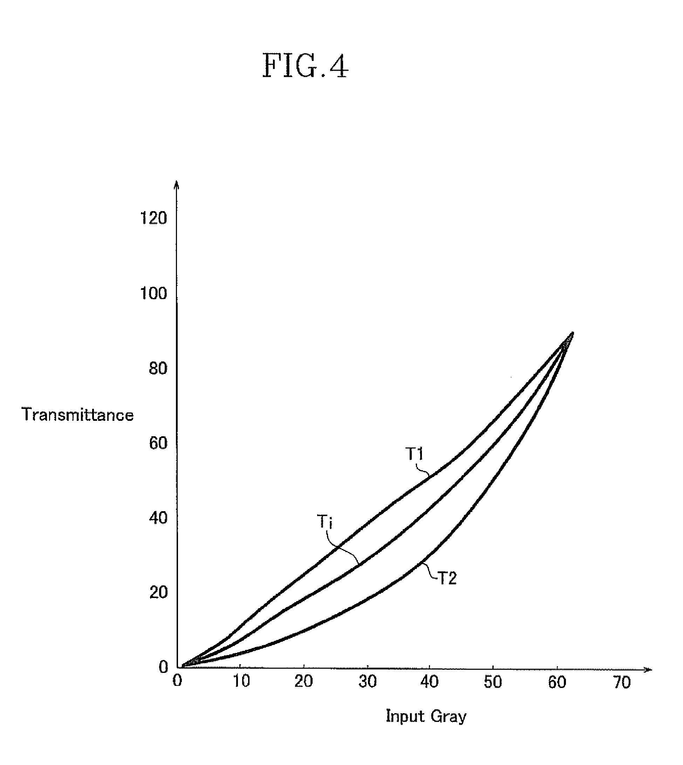

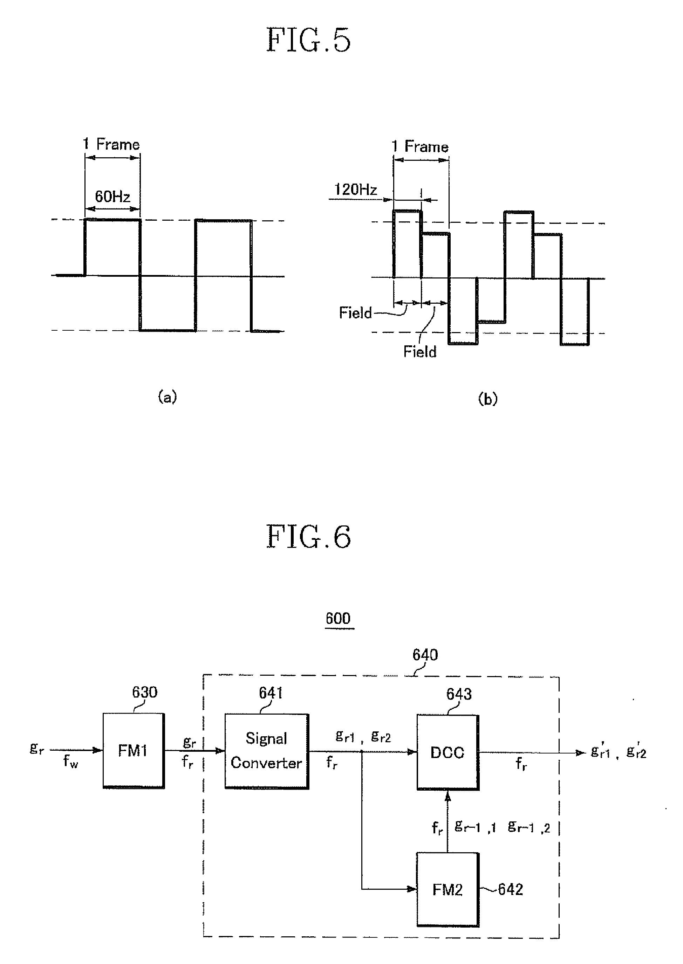

Fig. 3 is a block diagram of a signal controller of an LCD according to an embodiment of the present invention, Fig. 4 is a graph illustrating gamma curves before and after image data modification, and Fig. 5 illustrates data voltages corresponding to the image data before modification (a) and after modification (b).

As shown in Fig. 3, a signal controller 600 according to this embodiment includes a frame memory 610 and an image signal modifier circuit 620.

The frame memory 610 stores image data for a frame.

The image signal modifier circuit 620 receives image data $g_r$ stored in the frame memory 610, converts each image data $g_r$ into a plurality of output image data, for example, a first output image data $g_{r1}$ and a second output image data $g_{r2}$, and outputs the output image data. In detail, the image signal modifier 620 reads the image data $g_r$, converts

the image data $g_r$ into the first output image data $g_{r1}$, and outputs the first output image data $g_{r1}$, in a sequential manner. Thereafter, the image signal modifier 620 reads the image data $g_r$ again, converts the image data $g_r$ into the second output image data $g_{r2}$, and outputs the second output image data $g_{r2}$, in a sequential manner.

The data driver 500 applies data voltages corresponding to the first output image data $g_{r1}$ for all pixels to the data lines $D_1$-$D_m$, and then, applies data voltages corresponding to the second output image data $g_{r2}$ for all pixels to the data lines $D_1$-$D_m$.

Hereinafter, the periods for outputting the first and the second output image data $g_{r1}$ and $g_{r2}$ and the periods for applying data voltages corresponding to the first and the second output image data $g_{r1}$ and $g_{r2}$ are referred to as field.

Since the image data stored in the frame memory 610 are read twice, the read frequency (or the output frequency) (fr) of the frame memory 610 is twice the write frequency (or the input frequency) (fw). Therefore, if the input frame frequency (fw) of the frame memory 610 is equal to 60 Hz, the output field frequency of the image signal modifier 620 and the frequency for applying data voltages are equal to 120Hz.

Referring to Fig. 4, the gamma curves T1 and T2 for two the output image data $g_{r1}$ and $g_{r2}$ are averaged to be equal to the gamma curve Ti for the input image data before modification.

In other words, the sum of light amount represented by the first and the second output image data $g_{r1}$ and $g_{r2}$ for a pixel is considered to be equal to light amount represented by the input image data $g_r$ before modification for the pixel. Here, the amount of light is equal to the multiplication of the luminance of light and the time for maintaining the light luminance.

Therefore, when the luminance represented by the input image data $g_r$ is denoted by $T(g_r)$, the luminance represented by the first output image data $g_{r1}$ is denoted by $T(g_{r1})$, and the luminance represented by the second output image data $g_{r2}$ is denoted by $T(g_{r2})$,

$$2T(g_r) = T(g_{r1}) + T(g_{r2}).$$

When an input image data $g_r$ is converted into two output image data $g_{r1}$ and $g_{r2}$, one of the two output image data $g_{r1}$ and $g_{r2}$ is lower than or equal to the other. The higher one is outputted first and then the lower one is outputted, or vice versa. For a normally black mode LCD where higher image data yields larger data voltages (relative to the common voltage), (b) of Fig. 5 illustrates data voltages when the higher one of two output image data $g_{r1}$ and $g_{r2}$ is outputted first and the lower one is then outputted. Fig. 5(a) shows data voltages for which no modification has been made.

When the lower one of two output image data $g_{r1}$ and $g_{r2}$ is made to be equal to or close to zero, the LCD has an effect of impulsive driving.

Referring to Fig. 6, a signal controller according to another embodiment of the present invention is described below in detail.

Fig. 6 is a block diagram of a signal controller according to another embodiment of the present invention.

Referring to Fig. 6, a signal controller 600 according to this embodiment includes a first frame memory 630 and an image signal modifier circuit 640. The image signal modifier circuit 640 includes a signal converter 641 coupled to the first frame memory 630, a second frame memory 642 coupled to the signal converter 641, and a DCC processor 643 coupled to the signal converter 641 and the second frame memory 642.

The operation of the first frame memory 630 and the signal converter 641 is substantially the same as the frame memory 610 and the image signal modifier 620 of the signal controller 600 shown in Fig. 3.

That is, the first frame memory 630 stores image data $g_r$ for a frame that are inputted at a first frequency (fw). The signal converter 641 reads out the image data $g_r$ stored the first frame memory 630 at a second frequency fr that is a half of the first frequency fw, converts each of the image data $g_r$ into first and second provisional image data $g_{r1}$ and $g_{r2}$, and outputs the first and second provisional image data $g_{r1}$ and $g_{r2}$. The principle of the conversion is described above with reference to Figs. 4 and 5.

The second frame memory 642 stores the provisional image data $g_{r1}$ and $g_{r2}$ for two fields from the signal converter 641.

The DCC processor 643 receives the image data from the signal converter 641 and the image data from the second frame memory 642. At this time, since the image data received from the second frame memory 642 is for a previous frame as compared with the image data received from the signal converter 641, the image data outputted from the second frame memory 642 are referred to as "previous image data" and denoted as $g_{r-1}$, and the image data received from the signal converter 641 are referred to as "current image data."

The DCC processor 643 compares each of the current image data $g_{r1}$ and $g_{r2}$ with the previous image data $g_{r-1,1}$ and $g_{r-1,2}$ corresponding thereto, and converts the current image data $g_{r1}$ and $g_{r2}$ into output image data $g_{r1}'$ and $g_{r2}'$ according to the comparison. At this time, the output image data is lower or higher than the current image data according to the difference between the current image data and the previous image data and such an operation is referred to as DCC (dynamic capacitive compensation).

For example, when the current image data $g_{r1}$ and $g_{r2}$ is higher than the previous image data $g_{r-1,1}$ and $g_{r-1,2}$, that is, $g_{r,p} > g_{r-1,p}$ (p=1, 2), the output image data $g_{r1}'$ and $g_{r2}'$ is higher than the current image data $g_{r1}$ and $g_{r2}$. Conversely, when the current image data $g_{r1}$ and $g_{r2}$ is lower than the previous image data $g_{r-1,1}$ and $g_{r-1,2}$, that is, $g_{r,p} < g_{r-1,p}$, the output image data $g_{r1}'$ and $g_{r2}'$ is lower than the current image data $g_{r1}$ and $g_{r2}$. Finally, when the current image data $g_{r1}$ and $g_{r2}$ is equal to the previous image data $g_{r-1,1}$ and $g_{r-1,2}$, i.e., $g_{r,p} = g_{r-1,p}$, the output image data $g_{r1}'$ and $g_{r2}'$ is equal to the current image data $g_{r1}$ and $g_{r2}$.

In this way, the output image data $g_{r1}'$ and $g_{r2}'$ is made to be higher or lower than the current image data $g_{r1}$ and $g_{r2}$ when the current image data $g_{r1}$ and $g_{r2}$ is different from the previous image data $g_{r-1,1}$ and $g_{r-1,2}$, such that a pixel quickly reaches a target luminance.

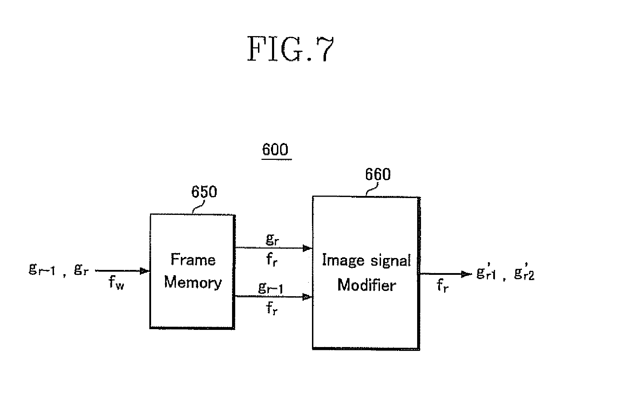

A signal controller according to another embodiment of the present invention is described below in detail with reference to Figs. 7, 8 and 9.

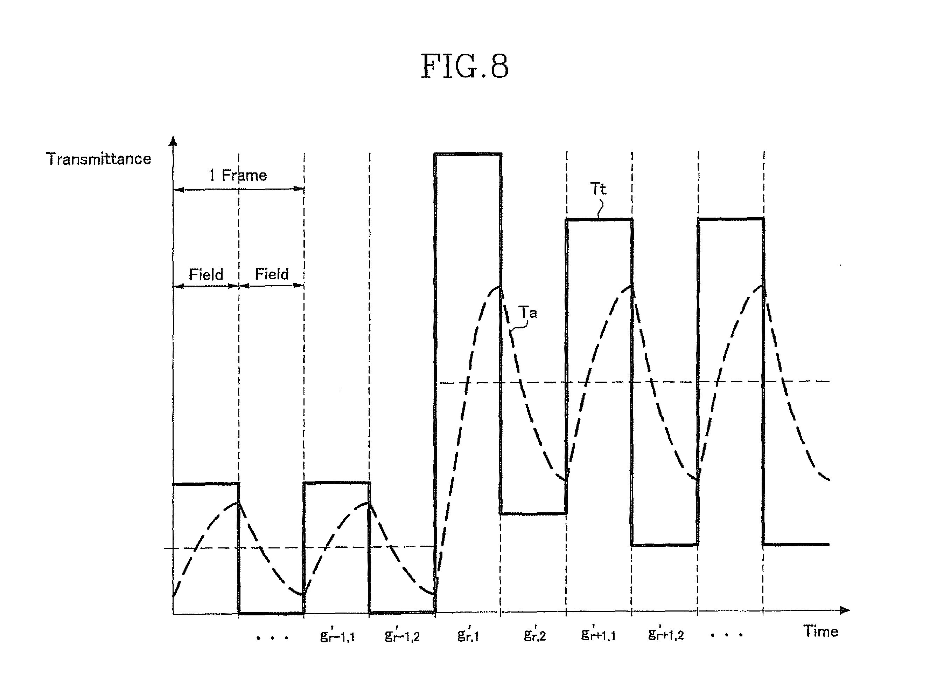

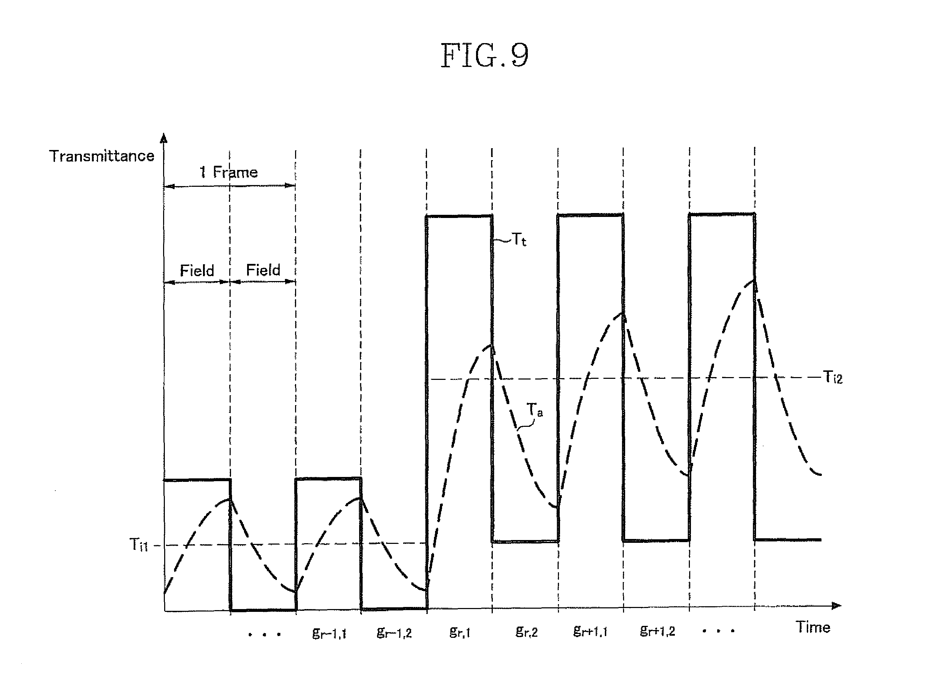

Fig. 7 is a block diagram of a signal controller according to another embodiment of the present invention. Fig. 8 is a graph illustrating time variation of light transmittance of the LCD including the signal controller shown in Fig. 7; and Fig. 9 is a graph illustrating time variation of light transmittance of an LCD including the signal controller shown in Fig. 3.

Referring to Fig. 7, a signal controller 600 according to this embodiment includes the frame memory 650 and an image signal modifier 660 coupled to the frame memory 650.

The frame memory 650 stores image data for two frames, which are received at a first frequency fw.

The image signal modifier 660 reads out the previous input image data $g_{r-1}$ and the current input image data $g_r$ stored in the frame memory 650 at a second frequency fr that is a half of the first frequency. The image signal modifier 660 compares the current input image data $g_r$ with the previous input image data $g_{r-1}$ corresponding thereto and coverts the current input image data $g_r$ into first and second output image data $g_{r1}'$ and $g_{r2}'$ according to the comparison.

The first output image data $g_{r1}'$ is equal to, or higher or lower than the first provisional image data $g_{r1}$ as described with reference to Fig. 6 (or the first output image data $g_{r1}$ of the image signal modifier 620 as described with reference to Fig. 3) according to the difference in the magnitude between the current input image data $g_r$ the previous input image data $g_{r-1}$.

For example, when the current input image data $g_r$ is higher than the previous input image data $g_{r-1}$, that is, $g_r > g_{r-1}$, the first output image data $g_{r1}'$ is higher than the first provisional image data $g_{r1}$. Conversely, when the current input image data $g_r$ is lower than the previous input image data $g_{r-1}$, that is, $g_r < g_{r-1}$, the first output image data $g_{r1}'$ is lower than the first provisional image data $g_{r1}$. Finally, when the current input image data $g_{r1}$ and $g_{r2}$ is equal to the previous input image data $g_{r-1,1}$ and $g_{r-1,2}$, that is, $g_r = g_{r-1}$, the first output image data $g_{r1}'$ is equal to the first provisional image data $g_{r1}$.

In this way, the first output image data $g_{r1}'$ is made to be higher or lower than the first provisional image data $g_{r1}$ when the current image data $g_{r1}$ and $g_{r2}$ is different from the previous image data $g_{r-1,1}$ and $g_{r-1,2}$, such that a pixel quickly reaches to a target luminance.

However, when determining the second output image data $g_{r2}'$, the method for obtaining the first output image data $g_{r1}'$, i.e., the DCC is not applied. In particular, the second output image data $g_{r2}'$ is made to be equal to the second provisional image data $g_{r2}$ when the second output image data $g_{r2}'$ is close to or equal to zero.

The second output image data $g_{r2}'$ is determined by experimentation. For example, the second output image data $g_{r2}'$ is determined as a value that can make the LCD most quickly reach a transmittance curve in a resultant equilibrium state, which is obtained by continuously applying data voltages corresponding to the first provisional image data $g_{r1}$ and the second provisional image data $g_{r2}$. In detail, it is assumed that the input image data is varied from the (r-1)th frame to the r-th frame and remains thereafter. Then, the second output image data $g_{r2}'$ is determined as a value that can most quickly take the transmittance curve to a final equilibrium state, for example, from the (r+1)-th frame.

The transmittance of the LCD employing the first and the second output image data determined as described above is illustrated in Fig. 8, and the transmittance of the LCD employing the first and the second output image data determined as shown in Fig. 3 is illustrated in Fig. 9.

In Figs. 8 and 9, $T_{i1}$ and $T_{i2}$ illustrate an expected transmittance of a pixel when there is no image data modification. Tt illustrates an expected transmittance of a pixel when the input image data is modified, and Ta illustrates an actual transmittance of a pixel when the input image data is modified. The transmittances Tt and Ta are different due to the slow response time of liquid crystal, which requires DCC.

When the DCC is applied to the first output image data but not to the second output image data, the second output image data having a value that can quickly cause an equilibrium state, the transmittance curve Ta reaches an equilibrium state from the (r+1)th frame shown in Fig. 8 .

On the contrary, the transmittance curve Ta shown in Fig. 9, where there is no DCC, varies during several frames.

An input image data may be converted into three or more output image data. For example, when an input image data is converted into three output image data, the output frequency may be three times the input frequency, the DCC may be applied to only one of the three output image data, which can give the highest luminance, the remaining two of the output image data may be obtained by experimentation. As another example, four input image data may be converted into three pairs of output image data and the DCC may be applied only to the highest one.

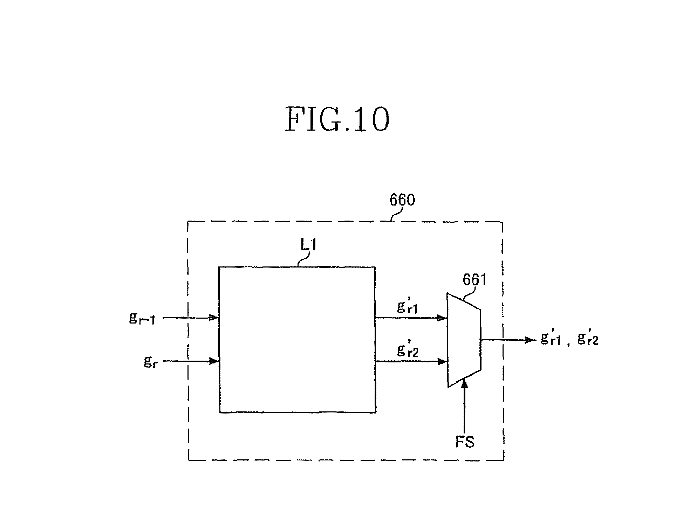

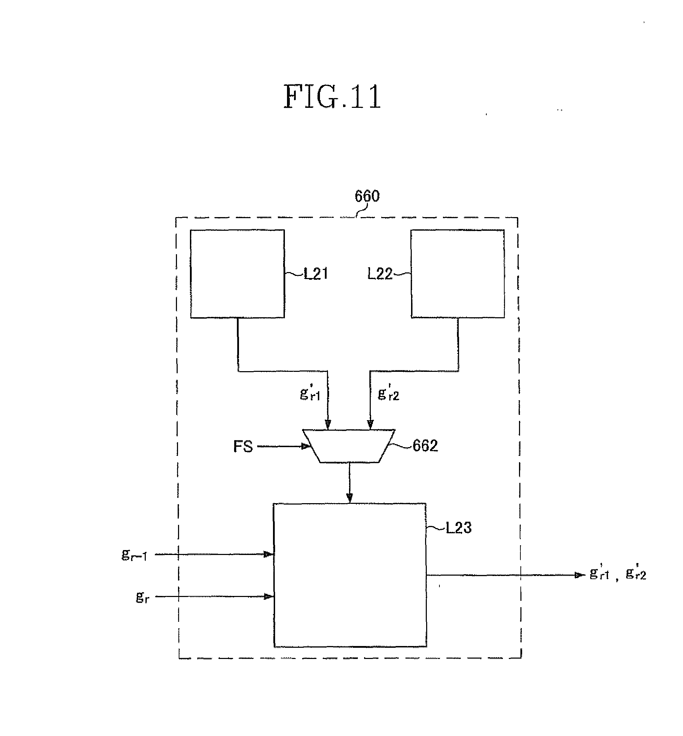

Examples of the image signal modifier are described below in detail with reference Figs. 10 and 11.

Figs. 10 and 11 are block diagrams of exemplary image signal modifiers according to embodiments of the present invention.

An image signal modifier 660 shown in Fig. 10 includes a lookup table L1 and a multiplexer 661 coupled to the lookup table L1 and receiving a field selection signal FS. The field selection signal FS determines a field in various ways, for example, by using the parity of the field or by using a counter. The field selection signal FS may be generated by the signal controller 600 or by an external device.

The lookup table L1 stores first and second output image data $g_{r1}'$ and $g_{r2}'$ as function of the previous input image data $g_{r-1}$ and the current input image data $g_r$ , which are obtained as described above with reference to Fig. 7. The lookup table L1 outputs the first and the second output image data $g_{r1}'$ and $g_{r2}'$ to the multiplexer 661 in response to the previous input image data $g_{r-1}$ and the current input image data $g_r$.

The multiplexer 661 selects one of the first and the second output image data $g_{r1}'$ and $g_{r2}'$ from the lookup table L1 based on the values of the field selection signal FS.

The image signal modifier 660 shown in Fig. 11 includes first and second lookup tables L21 and L22, a multiplexer 662 coupled to the first and the second lookup tables L21 and L22. Multiplexer 662 receives a field selection signal FS and the third lookup table L23 is coupled to the multiplexer 662.

The first and the second lookup tables L21 and L22 store first and second output image data $g_{r1}'$ and $g_{r2}'$ , respectively, which are obtained as described above with reference to Fig. 7.

The multiplexer 662 selects one of the first and the second output image data $g_{r1}'$ and $g_{r2}'$ from the first and the second lookup tables L1 and L2 and outputs the selected one of the first and the second output image data $g_{r1}'$ and $g_{r2}'$ based on the values of the field selection signal FS after a field is finished and before the next field begins.

The third lookup table L23 stores the selected one of the first and the second output image data $g_{r1}'$ and $g_{r2}'$ from the multiplexer 662 as function of the previous input image data $g_{r-1}$ and the current input image data $g_r$, and outputs the first or the second output image data $g_{r1}'$ and $g_{r2}'$ in response to the previous input image data $g_{r-1}$ and the current input image data $g_r$.

At this time, it is preferable for reducing the size of the lookup table that only one lookup table be used for several primary colors, for example, red, green and blue colors and the DCC conversion is performed simultaneously for the three colors.

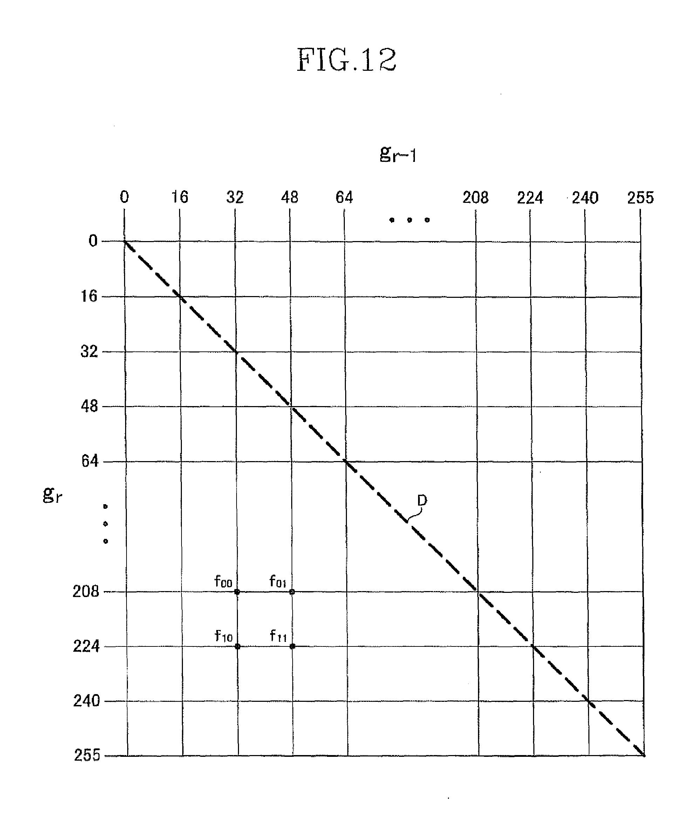

Examples of determining output image data by the LCD including the signal controller shown in Fig. 7 according to embodiments of the present invention is described below in detail with reference to Figs. 12, 13 and 14.

In this embodiment, the lookup table stores coefficients related to output image data for some pairs of previous and current image data and the image signal modifier obtains the output image data using the coefficients.

Fig. 12 illustrates a method of determining output image data by the LCD including the signal controller shown in Fig. 7 according to another embodiment of the present invention.

For descriptive convenience, input image data includes x most significant bits (MSB) and y least significant bits (LSB).

For 8-bit image data, since the number of the grays is equal to 256, the number of combinations of previous input image data $g_{r-1}$ and current input image data $g_r$ is equal to $256 \times 256 = 65,536$. Since the size of a lookup table for containing output image data $g_{r1}'$ and $g_{r2}'$ for all pairs of current and previous image data $g_r$ and $g_{r-1}$ may be tremendous, it is preferable, for example, that the output image data $g_{r1}'$ and $g_{r2}'$ only for some pairs of current and previous image data $g_r$ and $g_{r-1}$ are stored in the lookup table as reference data and the output image data $g_{r1}'$ and $g_{r2}'$ for remaining pairs of current and previous image data $g_r$ and $g_{r-1}$ are obtained by interpolation based on the reference data. In particular, it is simple that the output image data $g_{r1}'$ and $g_{r2}'$ for the pairs of current and previous image data $g_r$ and $g_{r-1}$ having zero LSB are stored and then the output image data $g_{r1}'$ and $g_{r2}'$ for remaining pairs of current and previous image data $g_r$ and $g_{r-1}$ are obtained on the basis thereof.

For 8-bit image data, the bit number of MSB is equal to four or three. When the bit number of the MSB is equal to four, the number of the stored output image data $g_{r1}'$ and $g_{r2}'$ may be equal to $17 \times 17$. When the bit number of the MSB is equal to three, the number of the stored output image data $g_{r1}'$ and $g_{r2}'$ may be equal to $9 \times 9$.

When the bit number of the MSB is equal to four, the previous input image data $g_{r-1}$ and the current input image data $g_r$ are arranged along a horizontal axis and a vertical axis, respectively, as shown in Fig. 12.

The combinations of the previous input image data $g_{r-1}$ and the current input image data $g_r$ are grouped into a plurality of blocks based on the MSB values of the previous input image data $g_{r-1}$ and the current input image data $g_r$. The blocks are represented as square areas enclosed by solid lines as shown in Fig. 12. The dots located at the boundaries of the blocks represent the combinations of the previous input image data $g_{r-1}$ and the current input image data $g_r$, at least one of which has zero LSB value. The previous input image data $g_{r-1}$ of the dots within one block have the same MSB value and the current input image data $g_r$ of the dots located within one block also have the same MSB value. In addition, the MSB values of the dots located on the left edge and the upper edge of each block are equal to those of the dots within the block, while the MSB values of the dots on the right edge and the lower edge are different from those of dots within the block.

The output image data for the dots located at the vertexes defining the blocks are first determined and referred to reference data f. For example, Fig. 12 shows four output data $f_{00}$, $f_{01}$, $f_{10}$ and $f_{11}$ for four vertexes defining a block. The output image data for other dots are then calculated using the reference data and the LSB thereof.

An exemplary interpolation is described below.

The MSB and the LSB of the current input image data $g_r$ are denoted by $g_r[x+y-1:y]$ and $g_r[y-1:0]$, respectively, and MSB and the LSB of the previous input image data $g_{r-1}$ are denoted by $g_{r-1}[x+y-1:y]$ and $g_{r-1}[y-1:y]$, respectively. Then, the reference data f can be expressed as $f(g_r[x+y-1:y], g_{r-1}[x+y-1:y]) = g_r'(g_r[x+y-1:y] \times 2^y, g_{r-1}[x+y-1:y] \times 2^y)$. Here, $g_r'$ means $g_{r1}'$ or $g_{r2}'$.

The output image data $g_r'$ for the dots in the blocks shown in Fig. 12 are calculated by interpolation.

$$g = f_{00} + p \times g_{r-1}[y-1:0]/2^y + q \times g_r[y-1:0]/2^y + r \times g_{r-1}[y-1:0] \times g_r[y-1:0]/2^{2y},$$

where $\alpha$ and $\beta$ are equal to LSBs of the previous input image data $g_{r-1}$ and the current input image data $g_r$ divided by a block length $2^y$, respectively, and $0 \leq \alpha < 1$, $0 \leq \beta < 1$.

Here,

$$p(g_r[x+y-1:y], g_{r-1}[x+y-1:y]) = f_{01} - f_00$$
$$= f(g_r[x+y-1:y], g_{r-1}[x+y-1:y]+1) - f(g_r[x+y-1:y], g_{r-1}[x+y-1:y]);$$

$$q(g_r[x+y-1:y], g_{r-1}[x+y-1:y]) = f_{10} - f_{00}$$
$$= f(g_r[x+y-1:y]+1, g_{r-1}[x+y-1:y]) - f(g_r[x+y-1:y], g_{r-1}[x+y-1:y]); \text{ and}$$

$$r(g_r[x+y-1:y], g_{r-1}[x+y-1:y]) = f_{00} + f_{11} - f_{01} - f_{10}$$
$$= f(g_r[x+y-1:y], g_{r-1}[x+y-1:y]) + f(g_r[x+y-1:y]+1, g_{r-1}[x+y-1:y])$$

$$- f(g_r[x+y-1:y], g_{r-1}[x+y-1:y]+1) - f(g_r[x+y-1:y]+1, g_{r-1}[x+y-1:y]). \tag{Eq. 1}$$

The coefficients p, q, and r other than the coefficients f may be calculated by operation, but it may make the processing time long. Therefore, the coefficients p, q, and r may be stored in the lookup table for saving the processing time.

In this way, the first output image data $g_{r1}'$ and the second output image data $g_{r2}'$ for the input image data $g_r$ may be obtained. It is noted that the above-described interpolation is only an example and there may be several interpolation scheme.

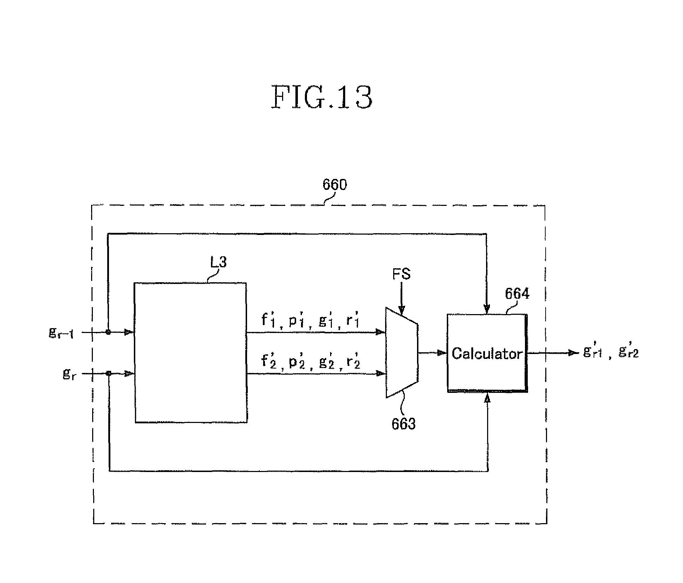

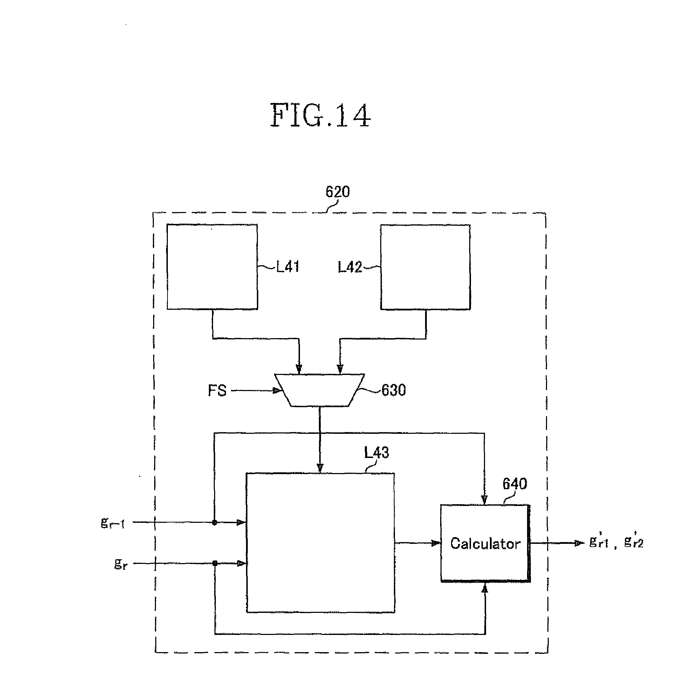

Figs. 13 and 14 are block diagrams of the image signal modifier according to other embodiments of the present invention, which modifies the image signals as described above.

An image signal modifier 660 shown in Fig. 13 includes a lookup table L3, a multiplexer 663 coupled to the lookup table L3, multiplexer 663 receiving a field selection signal FS; and a calculator 664 coupled to the multiplexer 663 and receiving previous and current input image data $g_{r-1}$ and $g_r$.

The lookup table L3 stores reference data $f_1$ and coefficients $p_1$, $q_1$ and $r_1$ for first output image data $g_{r1}'$ (which are referred to as first modification coefficients hereinafter) and reference data f2 and coefficients $p_2$, $q_2$ and $r_2$ for second output image data $g_{r2}'$ (which are referred to as first modification coefficients hereinafter). The first and the second modification coefficients are stored as function of previous input image data $g_{r-1}$ and current input image data $g_r$. The lookup table L3 outputs the first modification coefficients $f_1$, $p_1$, $q_1$ and $r_1$ and the second modification coefficients $f_2$, $p_2$, $q_2$, and $r_2$ to the multiplexer 663 in response to the previous input image data $g_{r-1}$ and the current input image data $g_r$.

The multiplexer 663 selects one of the first modification coefficients $f_1$, $p_1$, $q_1$ and $r_1$ and the second modification coefficients $f_2$, $p_2$, $q_2$ and $r_2$ from the lookup table L3 based on the values of the field selection signal FS.

The calculator 664 receives the selected one of the first and the second modification coefficients $f_1$, $p_1$, $q_1$, $r_1$, $f_2$, $p_2$, $q_2$ and $r_2$ from the multiplexer 663 and the LSBs of the previous and the current input image data $g_{r-1}$ and $g_r$ and performs the operation shown in Eq. 1 to generate the first output image data $g_{r1}'$ or the second output image data $g_{r2}'$.

The interpolation for generating the output image data $g_{r1}'$ and $g_{r2}'$, the size of the lookup table and the data processing time may be significantly reduced.

The image signal modifier 620 shown in Fig. 14 includes first and second lookup tables L41 and L42, a multiplexer 630 coupled to the first and the second lookup tables L41 and L42, multiplexer 630 receiving a field selection signal FS, a third lookup table L43 coupled to the multiplexer 630 and receiving previous and current input image data $g_{r-1}$ and $g_r$, and a calculator 640 coupled to the third lookup table L43 and receiving previous and current input image data $g_{r-1}$ and $g_r$.

The first and the second lookup tables L41 and L42 store the first and the second modification coefficients.

The multiplexer 630 selects one of the first and the second modification coefficients from the first and the second lookup tables L41 and L42 and outputs the selected one of the first and the second modification coefficients based on the values of the field selection signal FS after a field is finished and before the next field begins.

The third lookup table L43 stores the first or the second modification coefficients from the multiplexer 630 as function of the previous input image data $g_{r-1}$ and the current input image data $g_r$, and outputs the first or the second modification coefficients in response to the previous input image data $g_{r-1}$ and the current input image data $g_r$.

The calculator 640 receives the selected one of the first and the second modification coefficients $f_1$, $p_1$, $q_1$, $r_1$, $f_2$, $p_2$, $q_2$ and $r_2$ from the multiplexer 630 and the LSBs of the previous and the current input image data $g_{r-1}$ and $g_r$ and performs the operation shown in Eq. 1 to generate the first output image data $g_{r1}'$ or the second output image data $g_{r2}'$.

At this time, it is preferable for reducing the size of the lookup table that only one lookup table be used for several primary colors, for example, red, green and blue colors and the DCC conversion is performed simultaneously for the three colors as described with reference to Fig. 11.

In addition, an input image data may be converted into three or more output image data. For example, when an input image data is converted into three output image data, the output frequency may be three times the input frequency, the DCC may be applied to only one of the three output image data, which can give the highest luminance, the remaining two of the output image data may be obtained by experiments, etc. As for another example, four input image data may be converted into three pairs of output image data and the DCC may be applied only to the highest one.

Although preferred embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

**1.** An apparatus for driving a display device including a plurality of pixels arrange in a matrix, the apparatus comprising:

a signal controller adapted to convert current input image data received at a first frequency into a plurality of output image data provided at an output of the signal controller at a second frequency; and
a data driver coupled to the output of the signal controller, the data driver being adapted to convert the output image data into analog data voltages and to apply the data voltages to a pixel,

wherein the output image data includes a highest output image data that gives the highest luminance to the pixel, and the highest output image data is determined by comparing the current input image data with input image data of a previous frame.

2. The apparatus of claim 1, wherein the highest output image data is determined based on a highest provisional image data among provisional image data corresponding to the highest output image data according to a difference between the previous input image data and the current input image data.

3. The apparatus of claim 2, wherein the highest output image data is higher or lower than the highest provisional image data.

4. The apparatus of claim 2, wherein the highest output image data is equal to the highest provisional image data.

5. The apparatus of claim 3, wherein gamma curves for the provisional image data are averaged to a gamma curve for the current input image data.

6. The apparatus of claim 3, wherein sum of light amount of the pixel represented by the provisional image data is equal to light amount of the pixel represented by the current input image data.

7. The apparatus of claim 2, wherein the output image data comprise a first output image data and a second output image data, and the first output image data is higher than the second output image data.

8. The apparatus of claim 7, wherein the first output image data is determined based on a first provisional image data corresponding to the first output image data according to a difference between the previous input image data and the current input image data.

9. The apparatus of claim 8, wherein the first output image data is higher than the first provisional image data when the current input image data is higher than the previous input image data.

10. The apparatus of claim 8, wherein the first output image data is lower than the first provisional image data when the current input image data is lower than the previous input image data.

11. The apparatus of claim 8, wherein the first output image data is equal to the first provisional image data when the current input image data is equal to the previous input image data.

12. The apparatus of claim 8, wherein the first output image data is determined based on a transmittance curve in a resultant equilibrium state obtained by continuously applying data voltages corresponding to the first provisional image data and the second provisional image data to the pixel.

13. The apparatus of claim 7, wherein the signal controller comprises:

a frame memory adapted to store previous input image data and the current input image data; and
an image signal modifier adapted to compare the current input image data from the frame memory with the previous input image data and to convert the current input image data into the first and the second output image data.

14. The apparatus of claim 13, wherein the image signal modifier comprises:

a lookup table storing the first and the second output image data; and
a multiplexer selecting one of the first and the second output image data from the lookup table in response to a control signal.

15. The apparatus of claim 13, wherein the image signal modifier comprises:

a first lookup table adapted to store the first output image data;
a second lookup table adapted to store the second output image data;
a multiplexer coupled to the first and second lookup tables for receiving the first and the second output image data from the first and the second lookup tables and providing at an output one of the first and second output image data in response to a control signal; and

a third lookup table coupled to the output of the multiplexer for storing the first or the second output image data as function of the previous input image data and the current input image data and outputting the first or the second output image data in response to the previous input image data and the current input image data.

16. The apparatus of claim 1, wherein the signal controller comprises:

a frame memory storing the current input image data and the previous input image data; and

an image signal modifier converting the current input image data into the output image data based on the current input image data and the previous input image data from the frame memory,

wherein the image signal modifier comprises a lookup table storing output image data for a first part of pairs of the previous input image data and the current input image data, and output image data for a second part of pairs the previous input image data and the current input image data are obtained by using interpolation.

17. The apparatus of claim 16, wherein the output image data comprise a first output image data and a second output image data, and the first output image data is higher than the second output image data.

18. The apparatus of claim 17, wherein the image signal modifier comprises:

a lookup table storing modification coefficients for the first and the second output image data;

a multiplexer selecting one of modification coefficients for the first and the second output image data from the lookup table in response to a control signal; and

a calculator performing interpolation according to one of modification coefficients from the multiplexer, the previous input image data and the current input image data.

19. The apparatus of claim 17, wherein the image signal modifier comprises:

a first lookup table storing first modification coefficients for the first output image data;

a second lookup table storing second modification coefficients for the second output image data;

a multiplexer selecting one of the first and the second modification coefficients from the first and the second lookup table in response to a control signal;

a third lookup table storing the first or the second modification coefficients as function of the previous input image data and the current input image data and outputting the first or the second modification coefficients in response to the previous input image data and the current input image data; and

a calculator performing interpolation according to the first or the second modification coefficients from the third lookup table, the previous input image data and the current input image data.

20. The apparatus of claim 1, wherein the second frequency is twice the first frequency.

21. A liquid crystal display comprising:

a plurality of pixels arranged in a matrix;

a signal controller adapted to convert current input image data received at a first frequency into a plurality of output image data provided at an output of the signal controller at a second frequency; and

a data driver coupled to the output of the signal controller, the data driver being adapted to convert the output image data into analog data voltages and to apply the data voltages to a pixel,

wherein the output image data includes a highest output image data that gives the highest luminance to the pixel, and the highest output image data is determined by comparing the current input image data with input image data of a previous frame.

22. The liquid crystal display of claim 21, wherein the highest output image data is determined based on a highest provisional image data among provisional image data corresponding to the highest output image data according to a difference between the previous input image data and the current input image data.

23. The liquid crystal display of claim 22, wherein the highest output image data is higher or lower than the highest provisional image data.

24. The liquid crystal display of claim 22, wherein the highest output image data is equal to the highest provisional image data.

25. The liquid crystal display of claim 23, wherein gamma curves for the provisional image data are averaged to a gamma curve for the current input image data.

26. The liquid crystal display of claim 23, wherein sum of light amount of the pixel represented by the provisional image data is equal to light amount of the pixel represented by the current input image data.

27. The liquid crystal display of claim 22, wherein the output image data comprise a first output image data and a second output image data, and the first output image data is higher than the second output image data.

28. The liquid crystal display of claim 27, wherein the first output image data is determined based on a first provisional image data corresponding to the first output image data according to a difference between the previous input image data and the current input image data.

29. The liquid crystal display of claim 28, wherein the first output image data is higher than the first provisional image data when the current input image data is higher than the previous input image data.

30. The liquid crystal display of claim 28, wherein the first output image data is lower than the first provisional image data when the current input image data is lower than the previous input image data.

31. The liquid crystal display of claim 28, wherein the first output image data is equal to the first provisional image data when the current input image data is equal to the previous input image data.

32. The liquid crystal display of claim 28, wherein the first output image data is determined based on a transmittance curve in a resultant equilibrium state obtained by continuously applying data voltages corresponding to the first provisional image data and the second provisional image data to the pixel.

33. The liquid crystal display of claim 21, wherein the second frequency is twice the first frequency.

# FIG.1

EP 1 669 976 A2

# FIG.2

# FIG.3

600

610

620

$g_r$ $f_w$ → | Frame Memory | $\dfrac{g_r}{f_r}$ → | Image Signal Modifier | $f_r$ → $g_{r1}$ , $g_{r2}$

# FIG.4

# FIG.5

(a)

(b)

# FIG.6

600

# FIG.7

$\underline{600}$

$\underline{650}$

$g_{r-1}$ , $g_r$ $\xrightarrow{\quad f_w \quad}$ 

Frame Memory

$\dfrac{g_r}{f_r}$ $\longrightarrow$

$\dfrac{g_{r-1}}{f_r}$ $\longrightarrow$

$\underline{660}$

Image signal Modifier

$\xrightarrow{\quad f_r \quad}$ $g'_{r1}$ , $g'_{r2}$

# FIG.8

EP 1 669 976 A2

# FIG.9

EP 1 669 976 A2

# FIG.10

# FIG.11

660

L21  L22

$g'_{r1}$  $g'_{r2}$

FS → 662

L23

$g_{r-1}$ →

$g_r$ →

→ $g'_{r1}$ , $g'_{r2}$

# FIG.12

# FIG.13

# FIG.14